(19) **Europäisches Patentamt European Patent Office Office européen des brevets**

(11) **EP 4 553 336 A1**

(12) **EUROPEAN PATENT APPLICATION**

(43) Date of publication:
14.05.2025 Bulletin 2025/20

(51) International Patent Classification (IPC):
*F16F 7/104* (2006.01)

(21) Application number: 23208926.8

(52) Cooperative Patent Classification (CPC):
F16F 7/104

(22) Date of filing: 09.11.2023

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GE Energy Power Conversion Technology Limited Rugby, Warwickshire CV21 1BD (GB)**

(72) Inventor: **GALMICHE, Christophe 54250 CHAMPIGNEULLES (FR)**

(74) Representative: **Casalonga Casalonga & Partners Bayerstraße 71/73 80335 München (DE)**

(54) **DYNAMIC VIBRATION ABSORBER**

(57) The dynamic vibration absorber (7) comprises a first support part (8), a second support part (9) separated from the first support part by a first gap, and at least a first vibration absorber module (10), the first vibration absorber module (10) comprising a first surface (8a) of the first support part, a first surface (9a) of the second support part, and a first vibration absorber cylinder (13) connecting the first surface of the first support part and the first surface of the second support part, the first vibration absorber cylinder comprising a first cylindrical portion (13a) and at least a first movable mass (13c), the first movable mass being connected to the first cylindrical portion and being configured to vibrate at a predetermined frequency.

# FIG.2

EP 4 553 336 A1

**Description**

The present invention relates to a dynamic vibration absorber.

The invention relates more particularly to a dynamic vibration absorber for a rotating electric machine such as a motor or a generator.

A dynamic vibration absorber has been widely used to reduce the vibration of a machine. This is a part composed of a spring and a mass having a characteristic frequency which is the same as the frequency of a vibration in question, and reduces the vibration in question by use of vibrating with an opposite phase to the vibration in question and the inertia force of the mass.

Here, the following relationship is satisfied:

$$ f = \frac{1}{2\pi} \sqrt{\frac{K}{M}} \quad (1) $$

where f denotes a characteristic frequency (natural frequency), K denotes a spring stiffness, and M denotes a mass.

A dynamic vibration absorber typically used vibrates with an opposite phase to that of an input vibration at a characteristic frequency f which is determined by the ratio between a movable mass M and a spring stiffness K, and uses the inertia force of the mass M in order to reduce the vibration. Hence, one dynamic vibration absorber needs to be used for one frequency in question.

Further, one such dynamic vibration absorber can absorb only vibration in one direction. Therefore, absorption of, for example, whirling vibration additionally requires the use of another dynamic vibration absorber which absorbs vibration in a direction perpendicular to the first direction, thus necessitating a wide installation space. In order to absorb vertical vibration besides the whirling vibration, still another absorber must be used exclusively for the vertical vibration, requiring a further increased setting space.

Document EP 0204330 discloses a dynamic vibration absorber of a compact design capable of absorbing multidirectional vibration of a structure.

However, such a dynamic vibration absorber is complex to manufacture and to tune.

It is therefore proposed to remedy to at least one disadvantage related to dynamic vibration absorbers known from the prior art.

In view of the foregoing the invention proposes a dynamic vibration absorber.

The dynamic vibration absorber comprises a first support part, a second support part separated from the first support part by a first gap, and at least a first vibration absorber module, the first vibration absorber module comprising a first surface of the first support part, a first surface of the second support part, and a first vibration absorber cylinder connecting the first surface of the first support part and the first surface of the second support part, the first vibration absorber cylinder comprising a first cylindrical portion and at least a first movable mass, the first movable mass being connected to the first cylindrical portion and being configured to vibrate at a predetermined frequency.

Preferably, the first vibration absorber cylinder comprises a second cylindrical portion, the first movable mass being inserted between the first cylindrical portion and the second cylindrical portion, the first movable mass being further connected to the second cylindrical portion and being configured to vibrate at the predetermined frequency between the first and second cylindrical portions.

Advantageously, the first and second cylindrical portions are made of a second material and the first movable mass is made of a first material, the elasticity modulus of the second material being smaller than the elasticity modulus of the first material, in particular the elasticity modulus of the second material being ten times smaller than the elasticity modulus of the first material, preferably, the elasticity modulus of the second material being hundred times smaller than the elasticity modulus of the first material.

Preferably, the dynamic vibration absorber further comprises additional masses secured on either side of the sides of the first movable mass which are not in contact with the first and the second cylindrical portion.

Advantageously, the dynamic vibration absorber further comprises a first damping layer inserted between the first cylindrical portion and the first movable mass, and a second damping layer inserted between the second cylindrical portion and the first movable mass, the first movable mass being connected to the first cylindrical portion through the first damping layer and the first movable mass being connected to the second cylindrical portion through the second damping layer.

Preferably, the first cylindrical portion, the second cylindrical portion and the first movable mass are made of a first material, and the first and second damping layers are made of a second material, the elasticity modulus of the second material being smaller than the elasticity modulus of the first material, in particular the elasticity modulus of the second material being ten times smaller than the elasticity modulus of the first material, preferably, the elasticity modulus of the second material being hundred times smaller than the elasticity modulus of the first material.

Advantageously, the first movable mass is inserted between the first cylindrical portion and the second cylindrical portion with a gap so that the first movable mass is not in contact with the first and the second cylindrical portion, the first vibration absorber cylinder further comprising a first set of connecting elements and a second set of connecting elements, each connecting element of the first set of connecting elements connecting the first movable mass to the first cylindrical portion and each connecting element of the second set of connecting elements connecting the first movable mass to the second cylindrical portion so that the first movable mass is connected to the first cylindrical portion and the second cylindrical portion through the first set and second set of connecting elements.

Preferably, the first movable mass comprises a first surface, a second surface opposed to the first surface, a third surface and a fourth surface opposed to the third surface, each connecting element of the first set of connecting elements connecting the movable mass and the first surface, each connecting element of the second set of connecting elements connecting to the movable mass and the second surface, the first dynamic vibration cylinder further comprising a third set of connecting elements and a fourth set of connecting elements, each connecting element of the third set of connecting elements connecting the third surface of the first movable mass and the first cylindrical portion or the second cylindrical portion, and each connecting element of the fourth set of connecting elements connecting the fourth surface of the first movable mass and the first cylindrical portion or second cylindrical portion.

Advantageously, the first cylindrical portion and the second cylindrical portion comprise threaded holes and screws, each screw being engaged in a threaded hole, a first end of each connecting element of the third set and fourth set being supported by a screw and the second end of the said connecting element being inserted in the first movable mass.

Preferably, each connecting element is made of a second material, the first movable mass is made of a first material, and the first cylindrical portion and second cylindrical portion are made of a third material, the elasticity modulus of the second material being equal or bigger or smaller than the elasticity modulus of the first material, for example the elasticity modulus of the second material being ten times smaller than the elasticity modulus of the first material, preferably, the elasticity modulus of the second material being hundred times smaller than the elasticity modulus of the first material, and the density of the first material being bigger than the density of the third material

Advantageously, each connecting element comprises a spring.

Preferably, the first cylindrical portion comprises a recess extending according the central axis of the first vibration absorber cylinder and a set of stems protruding from the first cylindrical portion and extending in the recess of the first cylindrical portion, the first movable mass comprising a set of through holes, each stem of the set of the first cylindrical portion being inserted in a through hole of the set of through holes of the first movable mass, the first movable mass being connected to the first cylindrical portion through the stems of the set of stems of the first cylindrical portion.

Advantageously, the first cylindrical portion comprises a recess extending according the central axis of the first vibration absorber cylinder and at least two stems protruding from the first cylindrical portion and extending in the recess of the first cylindrical portion, the first movable mass comprising a through hole, a first stem of the first cylindrical portion being inserted in the through hole of the first movable mass, the first vibration absorber cylinder further comprising a second movable mass including a through hole, the second stem of the first cylindrical portion being inserted in the through hole of the second movable mass, the second movable mass being configured to vibrate at a predetermined frequency.

Preferably, the first vibration absorber cylinder comprises a second cylindrical portion, the second cylindrical portion comprises a recess extending according the central axis of the first vibration absorber cylinder and a set of stems protruding from the second cylindrical portion and extending in the recess of the second cylindrical portion, the first vibration absorber cylinder further comprising a movable mass including a set of through holes, each stem of the set of the second cylindrical portion being inserted in a through hole of the set of through holes of the movable mass, the movable mass being connected to the second cylindrical portion through the stems of the set of stems of the second cylindrical portion, the movable mass being configured to vibrate at a predetermined frequency.

Advantageously, the dynamic vibration further comprises a second vibration absorber module comprising a second surface of the first support part, a second surface of the second support part, and a second vibration absorber cylinder connecting the second surface of the first support part and the second surface of the second support part, the second vibration absorber cylinder comprising a first cylindrical portion and at least a first movable mass, the first movable mass of the second vibration absorber cylinder being connected to the first cylindrical portion of the second vibration absorber cylinder and being configured to vibrate at a predetermined frequency.

Other characteristics and advantages of the invention will emerge on reading the following description of embodiments of the invention, provided solely by way of non-limiting examples and with reference to the drawings in which:

Figure 1 illustrates schematically an example of rotating electric machine according to the invention,
Figure 2 illustrates schematically a view of an example of a dynamic vibration absorber according to the invention,
Figure 3 illustrates schematically an example of a modelling of the dynamic vibration absorber according to the invention,
Figure 4 illustrates schematically a first example of a vibration absorber cylinder according to the invention,
Figure 5 illustrates schematically a second example of a vibration absorber cylinder according to the invention,
Figure 6 illustrates schematically a third example of a vibration absorber cylinder according to the invention,

Figure 7 illustrates schematically a fourth example of a vibration absorber cylinder according to the invention,

Figure 8 illustrates schematically a fifth example of a vibration absorber cylinder according to the invention,

Figures 9 and 10 illustrate schematically a sixth example of a vibration absorber cylinder according to the invention, and

Figures 11 and 12 illustrate schematically a seventh example of a vibration absorber cylinder according to the invention.

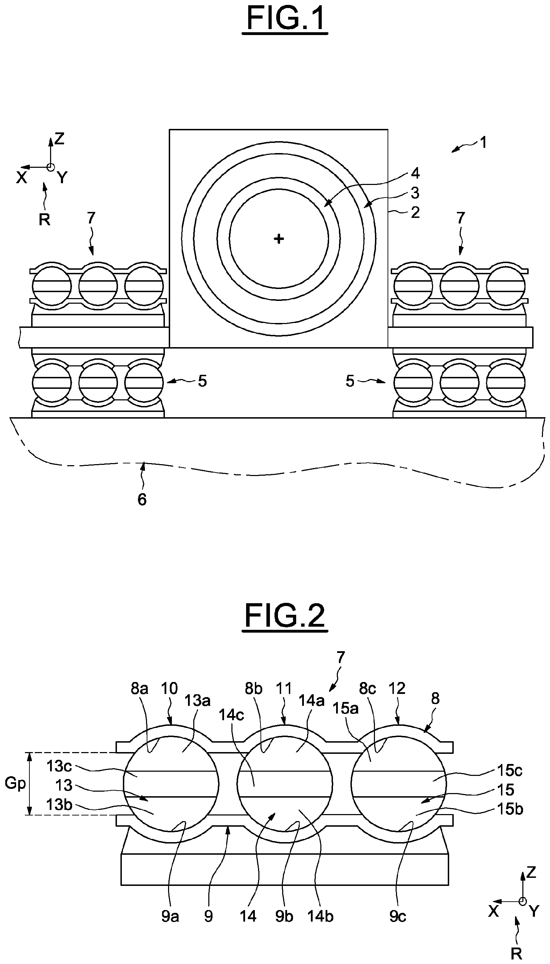

Figure 1 illustrates schematically an example of a rotating electric machine 1.

The rotating electric machine 1 comprises a casing 2, a stator 3 and a rotor 4.

The rotor 4 is inserted in the stator 3 and the stator 3 is lodged in the casing 2.

The casing 2 rests on a first end of anti-vibration mounts 5.

The second end of the anti-vibration mounts 5 rests for example on an upper surface of the foundations 6 of a factory or on foundations of a boat (not represented). The anti-vibration mounts 5 are resilient mounts of the machine 1, in order to reduce transmission of vibrations of machine 1 to the foundation 6.

Dynamic vibration absorbers 7 are arranged on the casing 2 to reduce predetermined vibrations generated by the rotation of the rotating electric machine 1. The mass of the machine 1 is supported by the mounts 5, not by the dynamic vibration absorbers 7.

A direct reference R is defined.

The reference R is fixed relative to the foundations 6 and comprises an axis X and an axis Y included in the upper surface of the foundations 6, and an axis Z perpendicular to the upper surface of the foundations 6.

The axis X is parallel to the transversal direction of the dynamic vibration absorber 7, the axis Y is parallel to the longitudinal direction of the dynamic vibration absorber 7 and the axis Z is parallel to the vertical direction of the dynamic vibration absorber 7.

In a non represented variant, the dynamic absorber 7 may be arranged on the stator 3 to absorb vibrations directly on the element generating vibrations (stator 3).

In another non represented variant, the vibration absorber cylinder 13 is arranged in the transversal direction X or vertical direction Z or any different direction

Figure 2 illustrate schematically a front view of an example of the dynamic vibration absorber 7.

The dynamic vibration absorber 7 comprises a first support part 8, a second support part 9 separated from the first support 8 part by a first gap Gp.

The two support parts 8, 9 are connected together for example with screws and nuts (not represented) located at the ends of the support parts 8, 9.

The dynamic vibration absorber 7 further comprises a first vibration absorber module 10, a second absorber module 11 and a third absorber module 12.

In a variant, the dynamic vibration absorber 7 may comprise one, two or more than three vibration absorber modules.

The first vibration absorber module 10 comprises a first surface 8a of the first support part 8, a first surface 9a of the second support part 9 and a first vibration absorber cylinder 13 connecting the first surface 8a of the first support part 8 and the first surface 9a of the second support part 9.

The second vibration absorber module 11 comprises a second surface 8b of the first support part 8, a second surface 9b of the second support part 9 and a second vibration absorber cylinder 14 connecting the second surface 8b of the first support part 8 and the second surface 9b of the second support part 9.

The third vibration absorber module 12 comprises a third surface 8c of the first support part 8, a third surface 9c of the second support part 9 and a third vibration absorber cylinder 15 connecting the third surface 8c of the first support part 8 and the third surface 9c of the second support part 9.

The first vibration absorber cylinder 13 comprises a first cylindrical portion 13a, a second cylindrical portion 13b and a first movable mass 13c. The first movable mass 13c is inserted between the first cylindrical portion 13a and the second cylindrical portion 13b, and connected to the first cylindrical portion 13a and the second cylindrical portion 13b.

The second vibration absorber cylinder 14 comprises a first cylindrical portion 14a, a second cylindrical portion 14b and a second movable mass 14c. The second movable mass 14c is inserted between the first cylindrical portion 14a and the second cylindrical portion 14b, and connected to the first cylindrical portion 14a and the second cylindrical portion 14b.

The third vibration absorber cylinder 15 comprises a first cylindrical portion 15a, a second cylindrical portion 15b and a third movable mass 15c. The third movable mass 15c is inserted between the first cylindrical portion 15a and the second cylindrical portion 15b, and connected to the first cylindrical portion 15a and the second cylindrical portion 15b.

It is assumed that the movable masses 13c, 14c, 15c are made of a first material and have the same mass M1, and the first and second cylindrical portions 13a, 13b, 14a, 14b, 15a, 15b are made of a second material.

The elasticity modulus of the second material is smaller than the elasticity modulus of the first material, in particular the elasticity modulus of the second material is ten times smaller than the elasticity modulus of the first material, preferably, the elasticity modulus of the second material is hundred times smaller than the elasticity modulus of the first material.

In variant, the movable masses 13c, 14c, 15c are made of different materials and the first and second cylindrical portions 13a, 13b, 14a, 14b, 15a, 15b are made of different material, however the elasticity modulus of the material of each movable mass 13c, 14c, 15c is different from the elasticity modulus of the material of the first and second cylindrical portions 13a, 13b, 14a, 14b, 15a, 15b encompassing the said movable mass.

In variant, the movable masses 13c, 14c, 15c have each a different weight to have three different natural frequencies according to the equation (1) to absorb three different frequencies of vibrations generated by the machine 1.

The first, second and third vibration absorber modules 10, 11, 12 form a first line.

In another non represented variant, the dynamic vibration absorber 7 comprises at least a second line comprising vibration absorber modules.

The second line may be arranged in the longitudinal direction Y and /or in the transversal direction X.

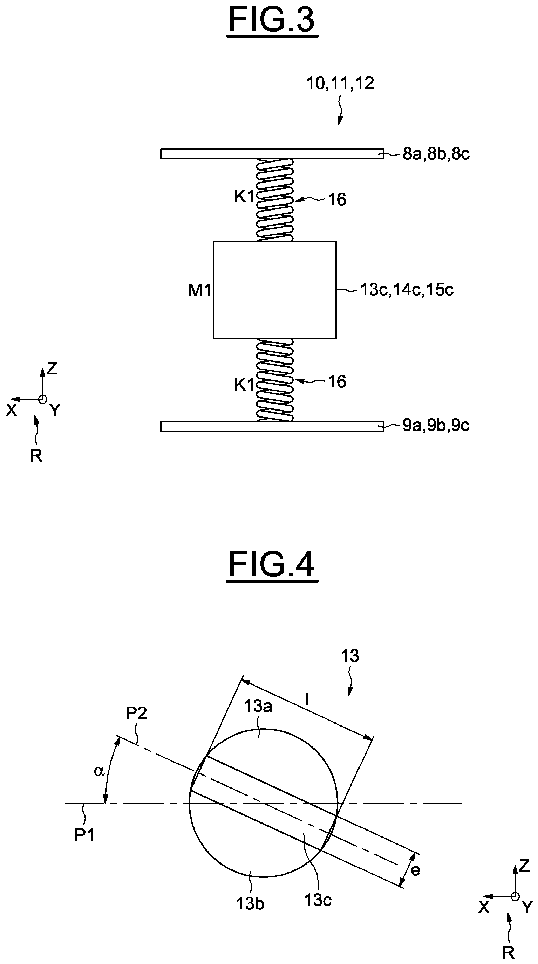

Figure 3 illustrates schematically a modelling of the first, second and third vibration absorber modules 10, 11, 12.

As the first and second cylindrical portions 13a, 13b, 14a, 14b, 15a, 15b are made of the second material, the said portions are modelled by a spring 16 having a stiffness K1 determined from the elasticity modulus of the second material.

The natural frequency Fo of each vibration absorber module 10, 11, 12 is equal to:

$$Fo = \frac{1}{2\pi} \sqrt{\frac{Keq}{M1}} \quad (2)$$

where Keq is the equivalent stiffness of both spring 16 having a stiffness K1 maintaining the mass M1.

When the movable masses 13c, 14c, 15c have each a different weight, each vibration absorber module 10, 11, 12 has a different natural frequency.

As it is assumed that the first, second and third vibration absorber cylinders 13, 14, 15 are identical, figure 4 illustrates schematically the front view of the first example of the first vibration absorber cylinder 13 illustrated in figures 1 and 2 without the support parts 8, 9.

A first plane P1 comprising axis X and Y of the direct reference R is defined.

The first movable mass 13 has a wide referenced 1 and a thickness referenced e.

The first vibration absorber cylinder 13 comprises a plane P2. The plane P2 includes the central axis of first vibration absorber cylinder 13 and divides the first movable mass 13c in two identical parts.

An angle α is defined between the plane P2 and the first plane P1 to the transversal direction of the first vibration absorber cylinder 13.

The frequencies of the vibrations reduced by the first vibration absorber cylinder 13 in the transversal direction (X axis) and the vertical direction (Z axis) depend on the value of the angle α

The frequency $F_T$ of the vibrations reduced by the first vibration absorber cylinder 13 in the transversal direction is approximated by:

$$F_T = Fo\sqrt{0.2 + 0.8 \sin \alpha} \quad (3)$$

and the frequency Fv of the vibrations reduced by the first vibration absorber cylinder 13 in the vertical direction is approximated by:

$$F_V = Fo\sqrt{0.2 + 0.8 \cos \alpha} \quad (4)$$

The frequencies of the vibrations reduced by the first vibration absorber cylinder 13 may be adjusted by rotating the first vibration absorber cylinder 13 which modifies the angle α.

By rotating the first vibration absorber cylinder 13, the frequency reduced by the first vibration absorber cylinder 13 may be easily tuned by rotating the first vibration absorber cylinder 13.

According to the value of the angle α, the first vibration absorber cylinder 13 may reduce at the same time the frequency of vibrations in the transversal direction (X axis) and the vertical direction (Z axis).

Further, the first vibration absorber cylinder 13 may reduce a predetermined frequency $F_\theta$ in a torsional direction (Y axis) of the first movable mass 13.

The predetermined frequency $F_\theta$ is equal to:

$$F_\theta = \frac{1}{2\pi} \sqrt{\frac{3K1l^2}{M1(l^2+e^2)}} \quad (5)$$

According to the value of the angle α, the vibration absorber modules 10, 11, 12 are tuned to reduce the vibrations of frequencies in the transversal direction (X axis), the vertical direction (Z axis) and the torsional direction (Y axis).

Of course, the angle value of the angle α of each vibration absorber module 10, 11, 12 of the first line may be different to reduce different vibrations according to the transversal, vertical and torsional directions at different predetermined frequencies Fv, $F_T$, Fe.

The movable mass 13c is preferably in steel. The movable mass 13c may be in metallic material such as cast iron, copper, lead, aluminium or different material for example concrete. The cylindrical portions 13a, 13b are preferably in rubber or any elastic material.

If the dynamic vibration absorber 7 comprises another line, for example the second line, the angle value of the angle α of each vibration absorber module of the second line may be different to reduce different vibrations according to the transversal, vertical and torsional directions at different predetermined frequencies Fv, $F_T$, Fe.

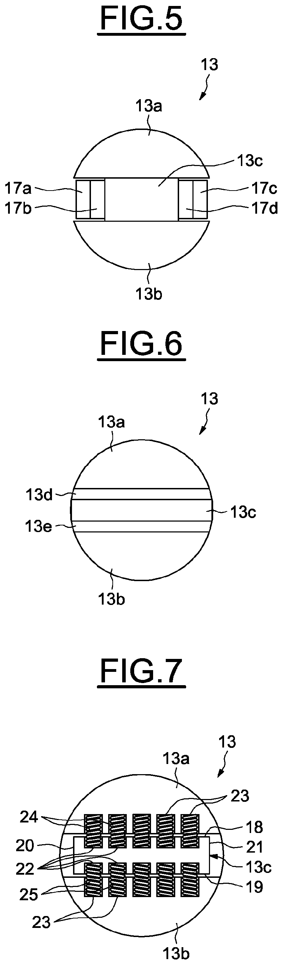

Figure 5 illustrates schematically a second example of the first vibration absorber cylinder 13.

The first vibration absorber cylinder 13 comprises the first and second cylindrical portions 13a, 13b and the first movable mass 13c.

The first vibration absorber cylinder 13 further comprises additional masses 17a, 17b, 17c, 17d having the same weight or having a different weight secured on either side of the sides of the first movable mass 13c. For example, additional mass 17a to 17d may be fixed by screws on the first movable mass 13c.

The addition of the additional masses 17a, 17b, 17c, 17d permits to modify the weight M1 of the first movable mass 13c to tune the frequencies in equations (2), (3), (4) and consequently the frequency $F_T$ of the vibrations reduced by the first vibration absorber cylinder 13 in the transversal direction and the frequency Fv of the vibrations reduced by the first vibration absorber cylinder 13 in the vertical direction without modifying the angle $\alpha$.

In addition, modifying the angle $\alpha$ as illustrate in figure 4 and adding masses 17a to 17d on the first movable mass 13c increase the number of combinations to tune the absorbed vibration frequencies.

In variant, the cylindrical portions 13a, 13b have different sections forming an angle of for example 180°, 120° or 90°.

Figure 6 illustrates schematically a third example of the first vibration absorber cylinder 13.

The first vibration absorber cylinder 13 comprises the first and second cylindrical portions 13a, 13b and the first movable mass 13c.

The first vibration absorber cylinder 13 further comprises a first damping layer 13d inserted between the first cylindrical portion 13a and the first movable mass 13c and a second damping layer 13e inserted between the second cylindrical portion 13b and the first movable mass 13c.

The first movable mass 13c is connected to the first cylindrical portion 13a through the first damping layer 13d and the first movable mass 13c is connected to the second cylindrical portion 13b through the second damping layer 13e.

The first cylindrical portion 13a, the second cylindrical portion 13b and the first movable mass 13c are made of the first material, and the first and second damping layers 13d, 13e are made of the second material.

The quantity of second material is reduced compared to the quantity of second material needed in the first and second example of the first vibration absorber cylinder 13.

The first material may be steel and the second material may be rubber.

Figure 7 illustrates schematically a fourth example of the first vibration absorber cylinder 13.

The first vibration absorber cylinder 13 comprises the first and second cylindrical portions 13a, 13b and the first movable mass 13c inserted between the first and second cylindrical portions 13a, 13b with a gap so that the first movable mass 13c is not in contact with the first and the second cylindrical portions 13a, 13b.

The first movable mass 13 comprises a first surface 18, a second surface 19 opposed to the first surface 18, a third surface 20 and a fourth surface 21 opposed to the third surface 20.

The first movable mass 13c further comprises holes 22 on the first and second surfaces 18, 19.

The first and second cylindrical portions 13a, 13b comprise holes 23, each hole 23 of the first and second cylindrical portions 13a, 13b being in front of a hole 22 of the first movable mass 13c.

The first vibration absorber cylinder 13c further comprises a first set of connecting elements 24 and a second set of connecting elements 25.

Each connecting element 24, 25 of the first and second sets of connecting elements may comprise a rubber element or a spring as represented or a combination of rubber and spring to adjust the stiffness and the damping of the absorber 13.

A first end of each connecting element 24 of the first set is inserted in a hole 22 on the first surface 18 of the first movable mass 13c and the second end of the said connecting element 24 is inserted in a hole 23 of the first cylindrical portions 13a in front of the hole 22 on the first surface 18.

A first end of each connecting element 25 of the second set is inserted in a hole 22 on the second surface 19 of the first movable mass 13c and the second end of the said connecting element 25 is inserted in a hole 23 of the second cylindrical portions 13b in front of the hole 22 on the second surface 19.

The connecting elements 24 of the first set connect the first movable mass 13c to the first cylindrical portion 13a and the connecting elements 25 of the second set connect the first movable mass 13c to the second cylindrical portion 13b so that the first movable mass 13c is connected to the first cylindrical portion 13a and the second cylindrical portion 13b through the first set and second set of connecting elements 24, 25.

The stiffness K1 in equation (2) is determined from the stiffness of the connecting elements 24, 25 of the first and second sets.

The frequency Fo may be tuned by modifying the stiffness of the connecting elements 24, 25 of the first and second sets or by removing some connecting elements 24, 25.

Each connecting element of the first set and second set of connecting elements may be made of the second material.

The first movable mass 13c may be made of the first material.

In this example, the first cylindrical portion and second cylindrical portion 13a, 13b are made of a third material.

The density of the first material is bigger than the density of the third material to avoid parasite frequencies which may be generated by the first cylindrical portion and second cylindrical portion 13a, 13b.

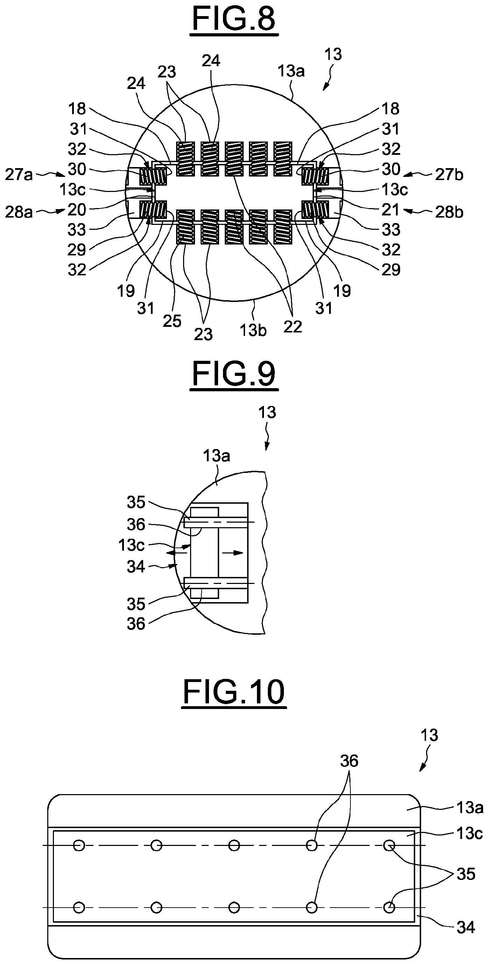

Figure 8 illustrates schematically a fifth example of the first vibration absorber cylinder 13.

The fourth example of the first vibration absorber cylinder 13 is different of the fourth example of the first vibration absorber cylinder 13 illustrated in figure 7 in that the first vibration absorber cylinder 13 further comprises a third set of connecting elements 29 and a fourth set of connecting elements 30.

Each connecting element 29 of the third set of connecting elements connects the third surface 20 of the first movable mass 13c and the first cylindrical portion 13a or the second cylindrical portion 13b, and each connecting element 30 of the fourth set of connecting elements connects the fourth surface 21 of the first movable mass 13c and the first cylindrical portion 13a or second cylindrical portion 13b.

Each connecting element 29, 30 of the third and fourth sets of connecting elements may comprise a rubber element or a spring as represented.

The first cylindrical portion 13a comprises on either side an extension 27a, 27b encompassing partially the third and fourth surfaces 20, 21 of the first movable mass 13c and the second cylindrical portion 13b comprises on either side an extension 28a, 28b encompassing partially the third and fourth surfaces 20, 21 of the first movable mass 13c.

The first movable mass 13c further comprises holes 31 on the third and fourth surfaces 20, 21.

The extensions 27a, 27b, 28a, 28b of the first and second cylindrical portions 13a, 13b comprise holes 32, each hole 32 of the extensions 27a, 27b, 28a, 28b of the first and second cylindrical portions 13a, 13b being in front of a hole 31 of the first movable mass 13c.

A first end of each connecting element 29 of the third set is inserted in a hole 31 on the third surface 20 of the first movable mass 13c and the second end of the said connecting element 29 is inserted in a hole 32 of the first cylindrical portions 13a or the second cylindrical portions 13b in front of the hole 31 on the third surface 20.

A first end of each connecting element 30 of the fourth set is inserted in a hole 31 on the fourth surface 21 of the first movable mass 13c and the second end of the said connecting element 30 is inserted in a hole 32 of the first cylindrical portions 13a or the second cylindrical portions 13b in front of the hole 31 on the fourth surface 21.

The third of fourth sets of connecting elements permit to double the number of frequencies reduced by the first vibration absorber cylinder 13.

In addition, the rotation of the cylinder 13 from a determined angle $\alpha$ as illustrated in figure 4 increases the number of combinations and tuning of the absorbed frequencies.

In a variant, as represented, the holes 32 of the extensions 27a, 27b, 28a, 28b may be threaded holes and the first vibration absorber cylinder 13 comprises screws 33. Each screw 33 is engaged in a hole 32. A first end of each connecting element 29, 30 of the third set and fourth set is supported by a screw 33 and the second end of the said connecting element 29, 30 is inserted in the first movable mass 13c.

The screws 33 preload the connecting elements 29, 30 and ease the access to the connecting elements 29, 30 by removing the screws 33.

Figures 9 and 10 illustrates schematically a partial cross section and a longitudinal view of a sixth example of the first vibration absorber cylinder 13.

Figure 9 illustrates schematically a cross section of the first cylindrical portion 13a.

The first cylindrical portion 13a comprises a recess 34 extending according the central axis of the first vibration absorber cylinder 13 and a set of stems 35 protruding from the first cylindrical portion 13a and extending in the recess 34 of the first cylindrical portion 13a.

The first movable mass 13c comprises a set of through holes 36.

Each stem 35 of the set of the first cylindrical portion 13a is inserted in a through hole 36 of the set of through holes of the first movable mass 13c.

The first movable mass 13c is connected to the first cylindrical portion 13a through the stems 35 of the set of stems of the first cylindrical portion 13a.

The total stiffness K1 in equation (2) is determined from the bending stiffness of the stems 35. The frequency $F_0$ may be tuned by modifying the stiffness of the stems 35 (section of the stems 35 or material of the stems 35), by removing at least one stem 35 or by sliding the movable mass 13c on the stems 35 to modify the bending stiffness of the stems 35.

In addition, the rotation of the cylinder 13 from a determined angle $\alpha$ as illustrated in figure 4 increases the number of combinations and tuning of the absorbed frequencies.

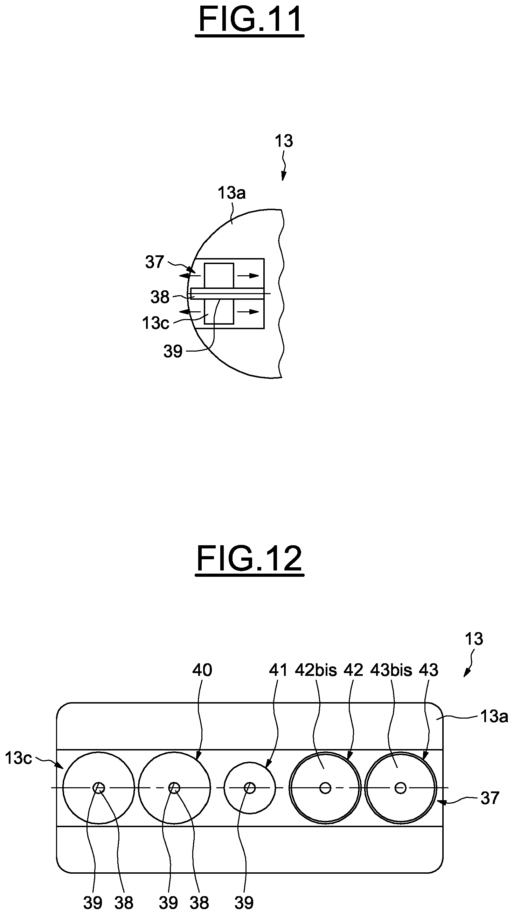

Figures 11 and 12 illustrates schematically a partial cross section and a longitudinal view of a seventh example of the first vibration absorber cylinder 13.

Figure 11 illustrates schematically a cross section of the first cylindrical portion 13a.

The first cylindrical portion 13a comprises a recess 37 extending according the central axis of the first vibration absorber cylinder 13 and a set of stems 38 protruding from the first cylindrical portion 13a and extending in the recess 37 of the first cylindrical portion 13a.

The first movable mass 13c comprises a through hole 39.

A first stem of the set of stems 38 of the first cylindrical portion 13a is inserted in the through hole 39 of the first movable mass 13c.

The first vibration absorber cylinder 13 further comprises a second movable mass 40 including a through hole 39, a third movable mass 41 including a through hole 39, a fourth movable mass 42 and a mass 42bis including a through hole 39, and a fifth movable mass 43 and a mass 43bis including a through hole 39.

A second stem of the set of stems 38 of the first cylindrical portion 13a is inserted in the through hole 39 of the second movable mass 40, a third stem of the set of stems 38 of the first cylindrical portion 13a is inserted in the through hole 39 of the third movable mass 41, a fourth stem of the set of stems 38 of the first cylindrical portion 13a is inserted in the through hole 39 of the fourth movable mass 42 and the mass 42bis, and a fifth stem of the set of stems 38 of the first cylindrical portion 13a is inserted in the through hole 39 of the fifth movable mass 43 and the mass 43bis.

The weight of each movable mass 13c, 40, 41, 42, 42bis, 43, 43bis may be different so that each movable mass has a different natural frequency, each movable mass 13c, 40, 41, 42, 43 reducing vibrations having a frequency equal to the natural frequency of the said movable mass.

The frequency $F_0$ may be tuned by sliding the movable masses 13c, 40, 41, 42, 43 on the stems 38 to modify the bending stiffness of the stems 38.

In addition, the rotation of the cylinder 13 from a determined angle $\alpha$ as illustrated in figure 4 increases the number of combinations and tuning of the absorbed frequencies.

In another embodiment, the sixth and the seventh example of the first vibration absorber cylinder 13 illustrated in figures 9, 10, 11, 12 are combined so that the seventh example of the first vibration absorber cylinder 13 comprises the second cylindrical portion 13b including the recess 34 extending according the central axis of the first vibration absorber cylinder 13 and the set of stems 35 protruding from the second cylindrical portion 13a and extending in the recess 34 of the second cylindrical portion 13a, and a movable mass comprising through holes, the stems 35 of the second cylindrical portion 13a being inserted in the holes of the movable mass of the second cylindrical portion 13a.

In the examples of the vibration absorber illustrated in figures 5 to 12, the rotation of the angle $\alpha$ represented in figure 4 tunes the natural frequency $F_0$ without modifying the material or the dimensions of the elements of the cylinder 13.

**Claims**

1. Dynamic vibration absorber (7), **characterized in that** the dynamic vibration absorber comprises a first support part (8), a second support part (9) separated from the first support part by a first gap, and at least a first vibration absorber module (10), the first vibration absorber module (10) comprising a first surface (8a) of the first support part, a first surface (9a) of the second support part, and a first vibration absorber cylinder (13) connecting the first surface of the first support part and the first surface of the second support part, the first vibration absorber cylinder comprising a first cylindrical portion (13a) and at least a first movable mass (13c), the first movable mass being connected to the first cylindrical portion and being configured to vibrate at a predetermined frequency.

2. Dynamic vibration absorber according to claim 1, wherein the first vibration absorber cylinder (13) comprises a second cylindrical portion (13b), the first movable mass (13c) being inserted between the first cylindrical portion (13a) and the second cylindrical portion (13b), the first movable mass being further connected to the second cylindrical portion and being configured to vibrate at the predetermined frequency between the first and second cylindrical portions.

3. Dynamic vibration absorber according to claim 2, wherein the first and second cylindrical portions (13a, 13b) are made of a second material and the first movable mass (13c) is made of a first material, the elasticity modulus of the second material being smaller than the elasticity modulus of the first material, in particular the elasticity modulus of the second material being ten times smaller than the elasticity modulus of the first material, preferably, the elasticity modulus of the second material being hundred times smaller than the elasticity modulus of the first material.

4. Dynamic vibration absorber according to claim 3, further comprising additional masses (17a, 17b, 17c, 17d) secured on either side of the sides of the first movable mass (13c) which are not in contact with the first and the second cylindrical portions (13a, 13b).

5. Dynamic vibration absorber according to claim 2, further comprising a first damping layer (13d) inserted between the first cylindrical portion (13a) and the first movable mass (13c), and a second damping layer (13e) inserted between the second cylindrical portion (13b) and the first movable mass (13c), the first movable mass being connected to the first cylindrical portion through the first damping layer and the first movable mass being connected to the second cylindrical portion through the second damping layer.

6. Dynamic vibration absorber according to claim 5, wherein the first cylindrical portion (13a), the second cylindrical portion (13b) and the first movable mass (13c) are made of a first material, and the first and second damping layers (13d, 13e) are made of a second material, the elasticity modulus of the second material being smaller than the elasticity modulus of the first material, in particular the elasticity modulus of the second material being ten times smaller than the elasticity modulus of the first material, preferably, the elasticity modulus of the second material being hundred times smaller than the elasticity modulus of the first material.

7. Dynamic vibration absorber according to claim 2, wherein the first movable mass (13c) is inserted between the first cylindrical portion (13a) and the second cylindrical portion (13b) with a gap so that the first movable mass is not in contact with the first and the second cylindrical portion, the first vibration absorber cylinder (13) further comprising a first set of connecting elements (24) and a second set of connecting elements (25), each connecting element of the first set of connecting elements connecting the first movable mass to the first cylindrical portion and each connecting element of the second set of connecting elements connecting the first movable mass to the second cylindrical portion so that the first movable mass is connected to the first cylindrical portion and the second cylindrical portion through the first set and second set of connecting elements.

8. Dynamic vibration absorber according to claim 7, wherein the first movable mass (13c) comprises a first surface (18), a second surface (19) opposed to the first surface, a third surface (20) and a fourth surface (21) opposed to the third surface, each connecting element of the first set (24) of connecting elements connecting the movable mass and the first surface, each connecting element of the second set (25) of connecting elements connecting to the movable mass and the second surface, the first dynamic vibration cylinder (13) further comprising a third set of connecting elements (29) and a fourth set of connecting elements (30), each connecting element of the third set of connecting elements connecting the third surface of the first movable mass and the first cylindrical portion or the second cylindrical portion, and each connecting element of the fourth set of connecting elements connecting the fourth surface of the first movable mass and the first cylindrical portion or second cylindrical portion.

9. Dynamic vibration absorber according to claim 8, wherein the first cylindrical portion (13a) and the second cylindrical portion (13b) comprise threaded holes (31) and screws (33), each screw being engaged in a threaded hole, a first end of each connecting element of the third set and fourth set being supported by a screw and the second end of the said connecting element being inserted in the first movable mass.

10. Dynamic vibration absorber according to any one of claims 7 to 9, wherein each connecting element (24, 25, 29, 30) is made of a second material, the first movable mass (13c) is made of a first material, and the first cylindrical portion (13a) and second cylindrical portion (13b) are made of a third material, the elasticity modulus of the second material being equal or bigger or smaller than the elasticity modulus of the first material, for example the elasticity modulus of the second material being ten times smaller than the elasticity modulus of the first material, preferably, the elasticity modulus of the second material being hundred times smaller than the elasticity modulus of the first material, and the density of the first material being bigger than the density of the third material.

11. Dynamic vibration absorber according to any one of claims 7 to 10, wherein each connecting element (24, 25, 29, 30) comprises a spring.

12. Dynamic vibration absorber according to claim 1, wherein the first cylindrical portion (13a) comprises a recess (34) extending according the central axis of the first vibration absorber cylinder (13) and a set of stems (35) protruding from the first cylindrical portion and extending in the recess of the first cylindrical portion, the first movable mass (13c) comprising a set of through holes (36), each stem of the set of the first cylindrical portion being inserted in a through hole of the set of through holes of the first movable mass, the first movable mass being connected to the first cylindrical portion through the stems of the set of stems of the first cylindrical portion.

13. Dynamic vibration absorber according to claim 1, wherein the first cylindrical portion (13a) comprises a recess (37) extending according the central axis of the first vibration absorber cylinder (13) and at least two stems (38) protruding from the first cylindrical portion and extending in the recess of the first cylindrical portion, the first movable mass (13c) comprising a through hole (39), a first stem of the first cylindrical portion being inserted in the through hole of the first movable mass, the first vibration absorber cylinder (13) further comprising a second movable mass (40) including a through hole (39), the second stem (38) of the first cylindrical portion being inserted in the through hole of the second movable mass, the second movable mass being configured to vibrate at a predetermined frequency.

14. Dynamic vibration absorber according to claim 13, wherein the first vibration absorber cylinder (13) comprises a second cylindrical portion (13b), the second cylindrical portion comprises a recess extending according the central axis of the first vibration absorber cylinder and a set of stems protruding from the second cylindrical portion and extending in the recess of the second cylindrical portion, the first vibration absorber cylinder further comprising a movable mass including a set of through holes, each stem of the set of the second cylindrical portion being inserted in a through hole of the set of through holes of the movable mass, the movable mass being connected to the second cylindrical portion through the stems of the set of stems of the second cylindrical portion, the movable mass being configured to vibrate at a predetermined frequency.

15. Dynamic vibration absorber, according to any one of claims 1 to 14, further comprising a second vibration absorber module (11) comprising a second surface (8b) of the first support part (8), a second surface (9b) of the second support part (9), and a second vibration absorber cylinder (14) connecting the second surface of the first support part and the second surface of the second support part, the second vibration absorber cylinder (14) comprising a first cylindrical portion and at least a first movable mass, the first movable mass of the second vibration absorber cylinder being connected to the first cylindrical portion of the second vibration absorber cylinder and being configured to vibrate at a predetermined frequency.

# FIG.1

# FIG.2

## FIG.3

10,11,12

8a,8b,8c

K1 — 16

M1 — 13c,14c,15c

K1 — 16

9a,9b,9c

## FIG.4

## FIG.5

## FIG.6

## FIG.7

# FIG.8

# FIG.9

# FIG.10

# FIG.11

13

13a

37

38

13c

39

# FIG.12

13

40    41 42bis 42 43bis 43

13a

13c

37

39  38   39  38   39

Europäisches
Patentamt

European
Patent Office

Office européen
des brevets

# EUROPEAN SEARCH REPORT

**Application Number**

**EP 23 20 8926**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 19 53 028 U (BBC BROWN BOVERI & CIE [DE]) 5 January 1967 (1967-01-05) | 1-3,15 | INV. F16F7/104 |
| A | * figure 1 * | 4-14 | |
| X | CN 101 338 808 B (TOKAI RUBBER IND LTD) 21 July 2010 (2010-07-21) * figure 5 * | 1 | |
| A | EP 4 118 357 B1 (LEONARDO SPA [IT]) 13 September 2023 (2023-09-13) * figure 1 * | 1-15 | |
| A | DE 101 50 031 A1 (KUNZ WUNNIBALD [DE]) 17 April 2003 (2003-04-17) * figure 4 * | 1 | |

**TECHNICAL FIELDS SEARCHED (IPC)**

F16F

The present search report has been drawn up for all claims

| Place of search | Date of completion of the search | Examiner |
|---|---|---|
| The Hague | 26 March 2024 | Beaumont, Arnaud |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

**EP 23 20 8926**

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2024

| Patent document cited in search report | | Publication date | Patent family member(s) | | Publication date |
|---|---|---|---|---|---|
| DE 1953028 | U | 05-01-1967 | DE | 1249018 B | 26-03-2024 |
| | | | DE | 1953028 U | 05-01-1967 |
| CN 101338808 | B | 21-07-2010 | CN | 101338808 A | 07-01-2009 |
| | | | EP | 2011673 A2 | 07-01-2009 |
| | | | JP | 4771999 B2 | 14-09-2011 |
| | | | JP | 2009014107 A | 22-01-2009 |
| | | | US | 2009008201 A1 | 08-01-2009 |
| EP 4118357 | B1 | 13-09-2023 | EP | 4118357 A1 | 18-01-2023 |
| | | | US | 2024002039 A1 | 04-01-2024 |
| | | | WO | 2022195361 A1 | 22-09-2022 |
| DE 10150031 | A1 | 17-04-2003 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0204330 A